# EUROPEAN PATENT APPLICATION

(11) **EP 4 393 751 A1**
(43) Date of publication of application: **03.07.2024**
(21) Application number: 22897493.7
(22) Date of filing: 24.10.2022
(51) Int. Cl.: B60L 3/00, B60L 58/10, B60L 53/00

(54) **CHARGING CONTROL METHOD AND APPARATUS, AND VEHICLE AND COMPUTER-READABLE STORAGE MEDIUM**

(30) Priority: 24.11.2021 CN 202111410225
(71) Applicant: BYD Company Limited, Shenzhen, Guangdong 518118 (CN)
(72) Inventor: ZENG, Qiuyong, Shenzhen, Guangdong 518118 (CN); SHEN, Xiaofeng, Shenzhen, Guangdong 518118 (CN); DENG, Linwang, Shenzhen, Guangdong 518118 (CN); LIU, Yuanhong, Shenzhen, Guangdong 518118 (CN); YOU, Honggang, Shenzhen, Guangdong 518118 (CN); CAO, Xunwen, Shenzhen, Guangdong 518118 (CN)
(74) Representative: Dehns Germany Partnerschaft mbB
(86) International application number: PCT/CN2022/126946
(87) International publication number: WO 2023/093410

(57) **Abstract**

A charging control method for a vehicle having an electric function is provided, and includes: Vehicle usage habit data of a user in preset time is read. The usage habit data includes a charging time point of each charging and driving mileage of each driving of the vehicle in the preset time. A current remaining state of charge of the vehicle at a current moment is detected. An estimated need state of charge of the vehicle is determined based on the usage habit data. Whether the vehicle needs charging is determined based on the estimated need state of charge and the current remaining state of charge. The present disclosure further provides a charging control apparatus, a vehicle, and a computer-readable storage medium.

## Description

### CROSS-REFERENCE TO RELATED APPLICATIONS

The present disclosure claims priority to and benefits of Chinese Patent Application No. 202111410225.0, filed on November 24, 2021 and entitled "CHARGING CONTROL METHOD AND APPARATUS, VEHICLE, AND COMPUTER-READABLE STORAGE MEDIUM". The entire content of the above-referenced application is incorporated herein by reference.

### FIELD

The present disclosure relates to the field of vehicle technologies, and in particular, to a charging control method and apparatus, a vehicle, and a computer-readable storage medium.

### BACKGROUND

An existing reservation charging manner is to charge a battery of a vehicle based on reservation time set by a user. Generally, the reservation time is electric valley time. Before the reservation time is reached, the vehicle and a charging device are in a sleep state. When the reservation time is reached, the vehicle and the charging device are awakened and start charging. Generally, the battery continues to be charged until the battery is fully charged, and a charging cut-off SOC state is 100%.

Although the reservation charging manner achieves valley charging, only electric load and electric costs of grids in various places are considered, a state of charge of the battery and an actual driving requirement of a client are not considered to determine whether the battery needs charging, and the charging cut-off SOC state of the battery is not determined when the battery needs charging. This affects battery life when the battery is in a high charging state for too long.

### SUMMARY

To solve the foregoing technical problems, according to the present disclosure, a charging control method and a charging control apparatus for a vehicle, a vehicle, and a computer-readable storage medium are provided. An estimated need state of charge is determined based on vehicle usage habit data of a user. Whether the vehicle needs charging is determined by comparing the estimated need state of charge and a current remaining state of charge. When charging is not needed, the vehicle can be prevented from being charged into a high charging state, so that battery life can be expanded because the high charging state of the vehicle is avoided; and the vehicle is charged on time when charging is needed.

According to a first aspect of the present disclosure, a charging control method for a vehicle having an electric function is provided. The charging control method includes the following steps: Vehicle usage habit data of a user in preset time is read. The usage habit data includes a charging time point of each charging and driving mileage of each driving of the vehicle in the preset time. A current remaining state of charge of the vehicle at a current moment is detected. An estimated need state of charge of the vehicle is determined based on the usage habit data. Whether the vehicle needs charging is determined based on the estimated need state of charge and the current remaining state of charge.

Optionally, that an estimated need state of charge of the vehicle is determined based on the usage habit data includes:
A driving range N of the vehicle at full charge is obtained. A next charging moment after the current moment and total driving mileage M in a time period from the current moment to the next charging moment is determined based on the usage habit data. The total driving mileage M is a sum of all driving mileage in the time period from the current moment to the next charging moment. The estimated need state of charge SOC1 is determined based on the total driving mileage M and the driving range N, where SOC1=M/N* 100%.

Optionally, that whether the vehicle needs charging is determined based on the estimated need state of charge and the current remaining state of charge includes:
It is determined, when the estimated need state of charge is greater than the current remaining state of charge, that the vehicle needs charging.

Optionally, the charging control method further includes: The vehicle is controlled to be charged to a target state of charge. The target state of charge is greater than or equal to the estimated need state of charge.

Optionally, that the vehicle is controlled to be charged to a target state of charge includes: The vehicle is controlled, when the estimated need state of charge is greater than a first preset state of charge, to be charged to a target state of charge that is equal to the estimated need state of charge. The vehicle is controlled, when the estimated need state of charge is less than or equal to the first preset state of charge, to be charged to a target state of charge that is equal to the first preset state of charge.

Optionally, that the vehicle is controlled to be charged to a target state of charge includes: The vehicle is controlled, when a sum of the estimated need state of charge and a second preset state of charge is greater than or equal to the first preset state of charge, to be charged to a target state of charge that is equal to the sum of the estimated need state of charge and the second preset state of charge. The vehicle is controlled, when the sum of the estimated need state of charge and the second preset state of charge is less than the first preset state of charge, to be charged to a target state of charge that is equal to the first preset state of charge.

Optionally, that whether the vehicle needs charging is determined based on the estimated need state of charge and the current remaining state of charge includes: It is determined, when the estimated need state of charge is less than or equal to the current remaining state of charge, and the current remaining state of charge is less than a third preset state of charge, that the vehicle needs charging, and the vehicle is controlled to be charged to a target state of charge that is equal to the third preset state of charge. It is determined, when the estimated need state of charge is less than or equal to the current remaining state of charge, and the current remaining state of charge is greater than or equal to the third preset state of charge, that the vehicle does not need charging.

Optionally, the usage habit data further includes a driving time point of each driving in the preset time, and the method further includes: A next driving start moment after the current moment is determined based on the driving time point of each driving when it is determined that the vehicle needs charging. An interval between the current moment and the next driving start moment is determined as first charging time. A charging current is determined based on the first charging time and a difference between the target state of charge and the current remaining state of charge.

Optionally, that a charging current is determined based on the first charging time and a difference between the target state of charge and the current remaining state of charge includes: The charging current is determined, when the target state of charge is equal to the estimated need state of charge, based on the first charging time and a difference between the estimated need state of charge and the current remaining state of charge.

Optionally, the usage habit data further includes a driving time point of each driving in the preset time, and the method further includes: A next driving start moment after the current moment is determined based on the driving time point of each driving when it is determined that the vehicle needs charging. An interval between the current moment and the next driving start moment is determined as first charging time. A charging current is determined based on the first charging time and a difference between the target state of charge and the current remaining state of charge.

Optionally, that a charging current is determined based on the first charging time and a difference between the target state of charge and the current remaining state of charge includes: The charging current is determined, when the target state of charge is equal to the sum of the estimated need state of charge and the second preset state of charge, based on the first charging time and the difference between the target state of charge and the current remaining state of charge. The difference between the target state of charge and the current remaining state of charge is the sum of the estimated need state of charge and the second preset state of charge minus the current remaining state of charge. The charging current is determined, when the target state of charge is equal to the first preset state of charge, based on the first charging time and a difference between the first preset state of charge and the current remaining state of charge.

Optionally, the usage habit data further includes a driving time point of each driving in the preset time, and the method further includes: A next driving start moment after the current moment is determined based on the driving time point of each driving when it is determined that the vehicle needs charging. Second charging time is determined based on a preset charging rate and a difference between the target state of charge and the current remaining state of charge. The second charging time is less than an interval between the current moment and the next driving start moment. A charging start moment is determined based on the second charging time. An interval between the charging start moment and the next driving start moment is the second charging time.

Optionally, that second charging time is determined based on a preset charging rate and a difference between the target state of charge and the current remaining state of charge includes: The second charging time is determined based on the preset charging rate and the estimated need state of charge when the target state of charge is equal to the estimated need state of charge.

Optionally, the usage habit data further includes a driving time point of each driving in the preset time, and the method further includes: A next driving start moment after the current moment is determined based on the driving time point of each driving when it is determined that the vehicle needs charging. Second charging time is determined based on a preset charging rate and a difference between the target state of charge and the current remaining state of charge. The second charging time is less than an interval between the current moment and the next driving start moment. A charging start moment is determined based on the second charging time. An interval between the charging start moment and the next driving start moment is the second charging time.

Optionally, that second charging time is determined based on a preset charging rate and a difference between the target state of charge and the current remaining state of charge includes: The second charging time is determined based on the preset charging rate and a sum of the estimated need state of charge and the second preset state of charge when the target state of charge is equal to the sum of the estimated need state of charge and the second preset state of charge. The second charging time is determined based on the preset charging rate and the first preset state of charge when the target state of charge is equal to the first preset state of charge.

Optionally, that whether the vehicle needs charging is determined based on the estimated need state of charge and the current remaining state of charge includes: It is determined, when the estimated need state of charge is less than or equal to the current remaining state of charge, that the vehicle does not need charging.

According to a second aspect of the present disclosure, a charging control apparatus for a vehicle is further provided. The charging control apparatus for a vehicle includes: a read module, configured to read vehicle usage habit data of a user in preset time, where the usage habit data includes a charging time point of each charging and driving mileage of each driving of the vehicle in the preset time; a detection module, configured to detect a current remaining state of charge of the vehicle at a current moment; and a processing module, configured to: determine an estimated need state of charge of the vehicle based on the usage habit data; and determine, based on the estimated need state of charge and the current remaining state of charge, whether the vehicle needs charging.

According to a third aspect of the present disclosure, a vehicle is further provided. The vehicle includes a battery and the foregoing charging control apparatus.

According to a fourth aspect of the present disclosure, a computer-readable storage medium is further provided. The computer-readable storage medium has a computer program stored therein. The computer program is executed by a processor to implement the foregoing charging control method.

According to the present disclosure, a charging control method and a charging control apparatus for a vehicle, a vehicle, and a computer-readable storage medium are provided. A driving requirement of a user is determined by obtaining vehicle usage habit data of the user. An estimated need state of charge is determined based on the driving requirement. Whether the vehicle needs charging is determined by comparing the estimated need state of charge and a current remaining state of charge. When charging is not needed, the vehicle can be prevented from being charged into a high charging state, so that battery life can be expanded because the high charging state of the vehicle is avoided. In addition, an electric vehicle is charged on time when charging is needed.

### BRIEF DESCRIPTION OF THE DRAWINGS

To describe the technical solutions in the present disclosure more clearly, the following briefly introduces the accompanying drawings required for describing the implementations. Apparently, the accompanying drawings in the following descriptions show some implementations of the present disclosure, and a person of ordinary skill in the art may still derive other drawings based on these accompanying drawings without creative efforts.
FIG. 1 is a flowchart of a charging control method for a vehicle according to an embodiment of the present disclosure;
FIG. 2 is a sub-flowchart of step S103 in FIG. 1;
FIG. 3 is a schematic diagram of a structure of a charging control apparatus according to an embodiment of the present disclosure; and
FIG. 4 is a block diagram of a structure of a vehicle according to an embodiment of the present disclosure.

Reference numerals: 100-charging control apparatus; 10-read module; 20-detection module; 30-processing module; 150-battery; 160-charging interface; 200-vehicle.

### DETAILED DESCRIPTION

The following clearly and completely describes the technical solutions in the embodiments of the present disclosure with reference to the accompanying drawings in the embodiments of the present disclosure. Apparently, the described embodiments are only some of the embodiments of the present disclosure rather than all of the embodiments. All other embodiments obtained by a person of ordinary skill in the art based on the embodiments of present disclosure without creative efforts shall fall within the protection scope of the present disclosure.

In descriptions of the present disclosure, the terms such as "first" "second", and "third" are intended to distinguish between different objects rather than indicate a particular order, and therefore, cannot be understood as limitations to the present disclosure.

In descriptions of the present disclosure, unless otherwise explicitly specified or defined, the term "connection" should be understood in a broad sense. For example, the connection may be a fixed connection, a detachable connection, or an integral connection; or the connection may be a direct connection, an indirect connection through an intermediary, or may alternatively be internal communication between two components. A person of ordinary skill in the art may understand specific meanings of the terms in the present disclosure according to specific situations.

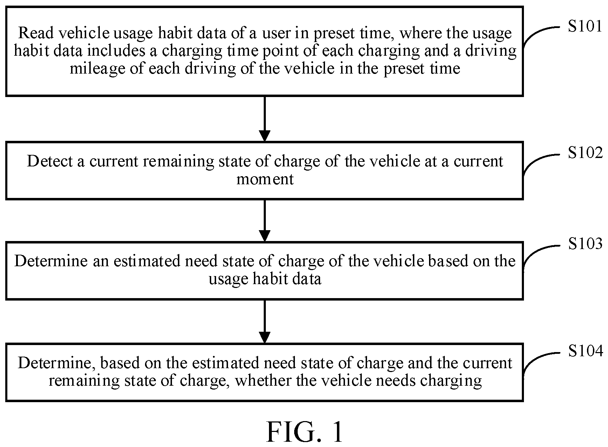

FIG. 1 is a flowchart of a charging control method for a vehicle having an electric function according to an embodiment of the present disclosure. As shown in FIG. 1, the charging control method includes the following steps.

S101: Vehicle usage habit data of a user in preset time is read, where the usage habit data includes a charging time point of each charging and driving mileage of each driving of the vehicle in the preset time.

S102: A current remaining state of charge of the vehicle at a current moment is detected.

S103: An estimated need state of charge of the vehicle is determined based on the usage habit data.

S104: Whether the vehicle needs charging is determined based on the estimated need state of charge and the current remaining state of charge.

According to embodiments of the present disclosure, the charging control method is provided. A driving requirement of the user is determined by obtaining the vehicle usage habit data of the user. The estimated need state of charge is determined based on the driving requirement. Whether the vehicle needs charging is determined by comparing the estimated need state of charge and the current remaining state of charge. When charging is not needed, the vehicle can be prevented from being charged into a high charging state, so that battery life can be expanded because the high charging state of the vehicle is avoided. In addition, an electric vehicle is charged on time when charging is needed.

The preset time may be one day, one week, one month, or the like. For example, the preset time may be one week, and the usage habit data includes the charging time point of each charging every day, the driving mileage of each driving every day, and a driving time point of each driving every day from Monday to Sunday. The longer the preset time, the more common the usage habit data is.

It may be understood that, the usage habit data indicates a charging habit and a using habit of the user for the vehicle in the preset time. Charging habits and using habits of most users for the vehicle are predictable and in common. Therefore, the usage habit data in the preset time indicates the charging habit and the using habit of the user for the vehicle in the past. Unless there is a special situation, the usage habit data may be used to predict the charging habit and the using habit of the user in the future.

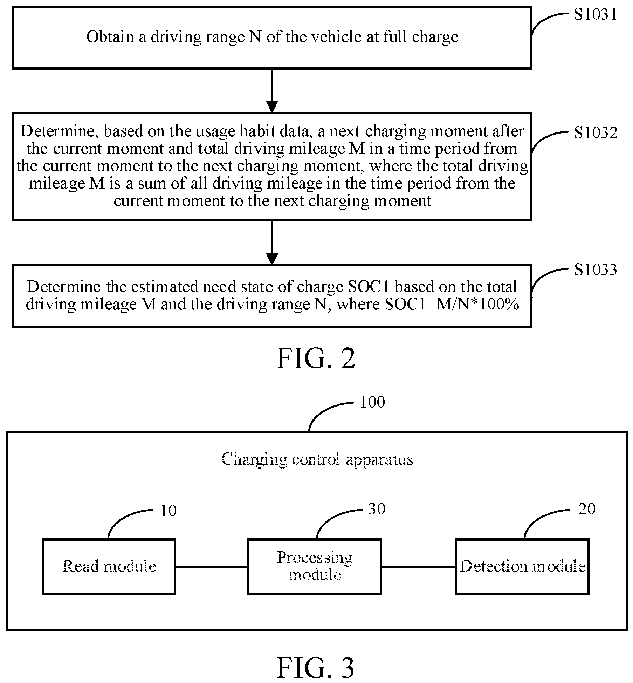

FIG. 2 is a sub-flowchart of step S103 in FIG. 1 according to an embodiment of the present disclosure. As shown in FIG. 2, in some embodiments, that an estimated need state of charge of a vehicle is determined based on usage habit data includes the following steps.

S1031: A driving range N of the vehicle at full charge is obtained.

S1032: A next charging moment after the current moment and total driving mileage M in a time period from the current moment to the next charging moment are determined based on the usage habit data. The total driving mileage M is a sum of all driving mileage in the time period from the current moment to the next charging moment.

S1033: The estimated need state of charge SOC1 is determined based on the total driving mileage M and the driving range N, where SOC 1=M/N* 100%.

The current moment may be located after a last driving end moment and may be located before a next driving start moment.

The driving range N may be a driving range of the vehicle at full charge when driving at a highest driving speed.

In some embodiments, the full charge is a maximum available state of charge of a battery of the vehicle. The maximum available state of charge may be determined based on a maximum state of charge stored by the battery and a preset fixed state of charge. The maximum available state of charge is a difference between the maximum state of charge stored by the battery and the preset fixed state of charge. For example, when the stored maximum state of charge is 100%, and the preset fixed state of charge is 10%, the maximum available state of charge is 90%. A value of the preset fixed state of charge may be set to another value based on an actual requirement. The preset fixed state of charge is an unavailable state of charge. To be specific, when state of charge consumption of the battery is equal to the preset fixed state of charge, the battery no longer provides power for the vehicle. An over-discharge caused when the battery is depleted may be prevented by setting the preset fixed state of charge. This can expand battery life.

It may be understood that, the next charging moment after the current moment may be determined based on charging time of each charging that is in the preset time and that is in the usage habit data. Driving times in a time period from the current moment to the next charging moment and the driving mileage of each driving may be determined based on the driving mileage of each driving that is in the preset time and that is in the usage habit data. In this way, the total driving mileage M in the time period from the current moment to the next charging moment can be determined. For example, it is determined that there are n times of driving in total in the time period from the current moment to the next charging moment based on the driving mileage of each driving in the preset time, driving mileage for the first driving is M1, driving mileage for the second driving is M2, ..., and driving mileage for n^{th} driving is Mn. In this case, the total driving mileage M=M1+M2+... +Mn.

In the charging control method for a vehicle provided in embodiments of the present disclosure, the total driving mileage of the user in the time point from the current moment to the next charging moment is determined by obtaining the usage habit data of the user, and the estimated need state of charge is determined based on the total driving mileage. This can calculate state of charge consumption of the vehicle quickly and conveniently to obtain the estimated need state of charge. In addition, in usage of the vehicle, the largest state of charge consumption is a length of a driving distance. Therefore, an actual use process of the vehicle by the user is considered when the estimated need state of charge is determined based on the total driving mileage.

In some embodiments, that whether the vehicle needs charging is determined based on the estimated need state of charge and the current remaining state of charge includes: It is determined, when the estimated need state of charge is greater than the current remaining state of charge, that the vehicle needs charging, and the vehicle is controlled to be charged to a target state of charge. The target state of charge is greater than or equal to the estimated need state of charge to satisfy a driving requirement of the user from the current moment to a next charging moment.

In the charging control method for a vehicle provided in embodiments of the present disclosure, the driving requirement of the user in the time point from the current moment to the next charging moment is determined by obtaining the usage habit data of the user. The estimated need state of charge is determined based on the driving requirement. It is determined, when the estimated need state of charge is greater than the current remaining state of charge, that the vehicle needs charging, and the vehicle is charged based on the estimated need state of charge. Therefore, the state of charge of the vehicle satisfies the driving requirement of the user before the next charging moment, and a high charging state of the vehicle due to overcharging can be avoided. This effectively reduces time in which the battery is in the high charging state, and expands the battery life.

In some embodiments, that the vehicle is controlled to be charged to a target state of charge includes: The vehicle is controlled, when the estimated need state of charge is greater than a first preset state of charge, to be charged to a target state of charge that is equal to the estimated need state of charge. The vehicle is controlled, when the estimated need state of charge is less than or equal to the first preset state of charge, to be charged to a target state of charge that is equal to the first preset state of charge.

The first preset state of charge may be set based on the actual requirement. For example, the first preset state of charge is set to 30%. The vehicle is controlled, when the vehicle needs charging, to be charged to the target state of charge that is greater than or equal to the first preset state of charge. This makes the vehicle have a sufficient state of charge for a self-discharge process of the battery when the vehicle is not used, to avoid shortening the battery life caused by the over-discharging of the battery.

In some other embodiments, that the vehicle is controlled to be charged to the target state of charge includes: The vehicle is controlled, when the sum of the estimated need state of charge and the second preset state of charge is greater than or equal to the first preset state of charge, to be charged to the target state of charge that is equal to a sum of the estimated need state of charge and a second preset state of charge. The vehicle is controlled, when the sum of the estimated need state of charge and the second preset state of charge is less than the first preset state of charge, to be charged to the target state of charge that is equal to the first preset state of charge. The second preset state of charge is less than the first preset state of charge.

The second preset state of charge may be set based on the actual requirement. For example, the second preset state of charge is set to 10%. The vehicle is controlled, when the vehicle needs charging, to be charged to the target state of charge that is greater than or equal to the sum of the estimated need state of charge and the second preset state of charge. This makes the target state of charge of the vehicle satisfy the driving requirement of the user, and makes the vehicle store the second preset state of charge as a backup. This avoids a case in which the vehicle cannot be used because of an insufficient state of charge when the user temporarily increases the driving mileage. In addition, the second preset state of charge may be a correction compensation value of the state of charge charged into the vehicle. Because in a charging process, the state of charge charged into the vehicle may deviate from a set value. The target state of charge The vehicle is controlled to be charged to the target state of charge that is greater than or equal to the sum of the estimated need state of charge and the second preset state of charge. This can compensate deviation of the charged state of charge in the charging process, so that the target state of charge is at least greater than the estimated need state of charge, to satisfy the driving requirement of the user.

In some embodiments, that whether the vehicle needs charging is determined based on the estimated need state of charge and the current remaining state of charge includes: It is determined, when the estimated need state of charge is less than or equal to the current remaining state of charge, and the current remaining state of charge is less than the third preset state of charge, that the vehicle needs charging, and the vehicle is controlled to be charged to the target state of charge that is equal to the third preset state of charge. It is determined, when the estimated need state of charge is less than or equal to the current remaining state of charge, and the current remaining state of charge is greater than or equal to the third preset state of charge, that the vehicle does not need charging.

The vehicle is controlled, when the estimated need state of charge is less than or equal to the current remaining state of charge, and the current remaining state of charge is less than a third preset state of charge, to be charged to the target state of charge that is equal to the third preset state of charge. This can make the vehicle have the sufficient state of charge for the self-discharge process of the battery when the vehicle is not used, to avoid shortening the battery life caused by the over-discharging of the battery. The third preset state of charge may be set based on the actual requirement. For example, the third preset state of charge is set to 30%.

It is determined, when the estimated need state of charge is less than or equal to the current remaining state of charge, and the current remaining state of charge is greater than or equal to the third preset state of charge, that the vehicle does not need charging. The current remaining state of charge of the vehicle satisfies the driving requirement of the user, and makes the vehicle have the sufficient state of charge for the self-discharge process of the battery when the vehicle is not used, to avoid shortening the battery life caused by the over-discharging of the battery. In addition, it is determined, by comparing the estimated need state of charge and the current remaining state of charge, that the current remaining state of charge can satisfy the driving requirement of the user. Therefore, it is determined that the vehicle does not need charging. This can avoid shortening the battery life caused by being in the high charging state when unnecessary charging of the vehicle is performed.

In other embodiments, it may be further determined, when the estimated need state of charge is less than or equal to the current remaining state of charge, that the vehicle does not need charging. When the current remaining state of charge of the vehicle can satisfy the driving requirement of the user, the vehicle may not be charged. In addition, this can avoid shortening the battery life caused by being in the high charging state when unnecessary charging of the vehicle is performed.

In some embodiments, the usage habit data further includes a driving start moment of each driving in the preset time, and the charging control method further includes: A next driving start moment after the current moment is determined based on the driving usage habit data when it is determined that the vehicle needs charging. An interval between the current moment and the next driving start moment is determined as first charging time. A charging current is determined based on the first charging time and a difference between the target state of charge and the current remaining state of charge. While ensuring that the vehicle is charged to the target state of charge of the vehicle in the first charging time, the vehicle is charged with as small the charging current as possible to expand the battery life of the vehicle.

In some embodiments, the charging current is determined, when the target state of charge is equal to the estimated need state of charge, based on the first charging time and the difference between the estimated need state of charge and the current remaining state of charge. To be specific, while ensuring that the vehicle is charged, in the first charging time, to the target state of charge of the vehicle that is equal to the estimated need state of charge, the vehicle is charged with as small the charging current as possible to expand the battery life of the vehicle.

In some other embodiments, the charging current is determined, when the target state of charge is equal to the sum of the estimated need state of charge and the second preset state of charge, based on the first charging time and the difference between the target state of charge and the current remaining state of charge. The difference between the target state of charge and the current remaining state of charge is the sum of the estimated need state of charge and the second preset state of charge minus the current remaining state of charge. To be specific, while ensuring that the vehicle is charged, in the first charging time, to the target state of charge of the vehicle that is equal to the sum of the estimated need state of charge and the second preset state of charge, the vehicle is charged with as small the charging current as possible to expand the battery life of the vehicle.

In some other embodiments, the charging current is determined, when the target state of charge is equal to the first preset state of charge, based on the first charging time and a difference between the first preset state of charge and the current remaining state of charge. To be specific, while ensuring that the vehicle is charged, in the first charging time, to the target state of charge of the vehicle that is equal to the first preset state of charge, the vehicle is charged with as small the charging current as possible to expand the battery life of the vehicle.

The charging control method is provided in embodiments of the present disclosure. The next driving start moment is determined based on the driving time point of each driving in the preset time. The interval between the current moment and the next driving start moment is determined as the first charging time. The vehicle is charged with as small the charging current as possible in the first charging time to expand the battery life of the vehicle. In addition, the charging time of the vehicle may be accurately determined by determining the next driving start moment, that is, the first charging time. This makes the vehicle to be charged to the target state of charge as scheduled in the first charging time, to ensure the driving requirement of the user.

In some embodiments, the usage habit data further includes a driving start moment of each driving in the preset time, and the charging control method further includes: The next driving start moment after the current moment is determined based on the usage habit data when it is determined that the vehicle needs charging. Second charging time is determined based on a preset charging rate and a difference between the target state of charge and the current remaining state of charge. The second charging time is less than an interval between the current moment and the next driving start moment. A charging start moment is determined based on the second charging time. An interval between the charging start moment and the next driving start moment is the second charging time.

The preset charging rate may be set based on a usage habit and a charging requirement of the user, or a set rate parameter of the vehicle. When the second charging time is determined based on the preset charging rate and the difference between the target state of charge and the current remaining state of charge, and the second charging time is less than the interval between the current moment and the next driving start moment, the selected charging start moment may be as close as possible to the next driving start moment. Therefore, when an interval between the charging start moment and the next driving start moment is equal to the second charging time, the vehicle is delayed to be charged. In this case, the battery of the vehicle is in the high charging state for as short a time as possible, to expand the battery life. Therefore, the charging control method provided in embodiments of the present disclosure can intelligently determine the charging start moment, and shorten time when the battery is in the high charging state, to expand the battery life.

In some embodiments, the second charging time is determined based on the preset charging rate and the estimated need state of charge when the target state of charge is equal to the estimated need state of charge. For example, the preset charging rate is 10%/h, the estimated need state of charge is 50%, and the second charging time is 5h.

In some other embodiments, the second charging time is determined based on the preset charging rate and the sum of the estimated need state of charge and the second preset state of charge when the target state of charge is equal to the sum of the estimated need state of charge and the second preset state of charge.

In some other embodiments, the second charging time is determined based on the preset charging rate and the first preset state of charge when the target state of charge is equal to the first preset state of charge.

In conclusion, in the charging control method for a vehicle provided in embodiments of the present disclosure, the total driving mileage in the time period from the current moment to the next charging moment is determined by obtaining the usage habit data of the user, and the estimated need state of charge is determined based on the total driving mileage. Whether the vehicle needs charging is determined by comparing the estimated need state of charge and the current remaining state of charge. When the vehicle does not need charging, the vehicle can be prevented from being charged into the high charging state, so that the battery life can be expanded because the high charging state of the vehicle is avoided. When the vehicle needs charging, the vehicle is charged on time, and the vehicle is charged based on the estimated need state of charge. Therefore, the state of charge of the vehicle satisfies the driving requirement of the user before the next charging moment, and the high charging state of the vehicle due to overcharging can be avoided. This effectively reduces the time in which the battery is in the high charging state, and expands the battery life.

FIG. 3 is a schematic structural diagram of a charging control apparatus 100 for a vehicle according to an embodiment of the present disclosure. The charging control method provided according to any one of the foregoing embodiments may be applied to the charging control apparatus 100. As shown in FIG. 3, the charging control apparatus 100 includes a read module 10, a detection module 20, and a processing module 30. The read module 10 is configured to read vehicle usage habit data of a user in preset time. The usage habit data includes a charging time point of each charging and driving mileage of each driving of the vehicle in the preset time. The detection module 20 is configured to detect a current remaining state of charge of the vehicle at a current moment. The processing module 30 is configured to: determine an estimated need state of charge of the vehicle based on the usage habit data; and determine, based on the estimated need state of charge and the current remaining state of charge, whether the vehicle needs charging.

According to embodiments of the present disclosure, the charging control apparatus 100 is provided. A driving requirement of the user is determined by obtaining the vehicle usage habit data of the user. The estimated need state of charge is determined based on the driving requirement. Whether the vehicle needs charging is determined by comparing the estimated need state of charge and the current remaining state of charge. When charging is not needed, the vehicle can be prevented from being charged into a high charging state, so that battery life can be expanded because the high charging state of the vehicle is avoided. In addition, an electric vehicle is charged on time when charging is needed.

In some embodiments, the charging control apparatus 100 further includes a storage module (which is not shown in the figure). The storage module is configured to store the vehicle usage habit data of the user in the preset time. The usage habit data includes a charging time point of the vehicle of each charging, driving mileage of each driving and a driving time point of each driving. The preset time may be one day, one week, one month, or the like. For example, the storage module stores the usage habit data of the user in the past one week, including the charging time point of each charging every day, the driving mileage of each driving every day, and a driving time point of each driving every day from Monday to Sunday. The longer the preset time, the more common the usage habit data is.

It may be understood that, the usage habit data indicates a charging habit and a using habit of the user for the vehicle in the preset time. Charging habits and using habits of most users for the vehicle are predictable and in common. Therefore, the usage habit data in the preset time indicates the charging habit and the using habit of the user for the vehicle in the past. Unless there is a special situation, the usage habit data may be used to predict the charging habit and the using habit of the user in the future.

In some embodiments, the read module 10 is configured to: read the vehicle usage habit data of the user that is in the preset time and that is stored in the storage module; and send the usage habit data to the processing module 30. The processing module 30 is configured to: determine the estimated need state of charge of the vehicle based on the usage habit data when receiving the usage habit data; and determine, based on the estimated need state of charge and the current remaining state of charge, whether the vehicle needs charging. The processing module 30 performs statistics and analysis on the usage habit data when receiving the usage habit data, to determine a next charging moment after the current moment and total driving mileage M in a time period from the current moment to the next charging moment. The total driving mileage M is a sum of all driving mileage in the time period from the current moment to the next charging moment.

In some embodiments, the processing module 30 is configured to: obtain a driving range N of the vehicle at full charge; and determine the estimated need state of charge SOC 1 based on the total driving mileage M and the driving range N, where SOC1=M/N* 100%. In some embodiments, the driving range N may be a driving range of the vehicle driving at a highest driving speed.

The read module 10 and the processing module 30 may be a processing chip such as a processor, a microcontroller, and a controller. The read module 10 and the processing module 30 may be a separate processing chip or an integrated processing chip. The detection module 20 may be a voltage detector, configured to: obtain voltage of the battery; and may obtain a corresponding state of charge based on a preset mapping relationship between the voltage and the state of charge. Alternatively, the detection module 20 may be integrated into a same processing chip with the read module 10 and the processing module 30. The storage module may be a memory such as a solid state drive, and an SD card.

In the charging control method for a vehicle provided in embodiments of the present disclosure, the total driving mileage of the user in the time point from the current moment to the next charging moment is determined by obtaining the usage habit data of the user, and the estimated need state of charge is determined based on the total driving mileage. This can calculate state of charge consumption of the vehicle quickly and conveniently to obtain the estimated need state of charge. In addition, in usage of the vehicle, the largest state of charge consumption is a length of a driving distance. Therefore, an actual use process of the vehicle by the user is considered when the estimated need state of charge is determined based on the total driving mileage.

In some embodiments, that the processing module 30 is configured to: determine the estimated need state of charge of the vehicle based on the usage habit data; and determine, based on the estimated need state of charge and the current remaining state of charge, whether the vehicle needs charging includes: The processing module 30 is configured to: determine, when the estimated need state of charge is greater than the current remaining state of charge, that the vehicle needs charging; and control the vehicle to be charged to a target state of charge, where the target state of charge is greater than or equal to the estimated need state of charge.

The processing module 30 determines that the vehicle needs charging and controls, when the estimated need state of charge is greater than the current remaining state of charge, the vehicle to be charged to a target state of charge that is greater than or equal to the estimated need state of charge by comparing the estimated need state of charge and the current remaining state of charge.

In some embodiments, the processing module 30 is configured to: control, when the estimated need state of charge is greater than the current remaining state of charge and is greater than the first preset state of charge, the vehicle to be charged to the target state of charge that is equal to the estimated need state of charge; and control, when the estimated need state of charge is greater than the current remaining state of charge, and is less than or equal to the first preset state of charge, the vehicle to be charged to a target state of charge that is equal to the first preset state of charge.

The processing module 30 is configured to: control, when the vehicle needs charging, to a target state of charge that is greater than or equal to the first preset state of charge, the vehicle to be charged. This makes the vehicle have a sufficient state of charge for a self-discharge process of the battery when the vehicle is not used, to avoid shortening the battery life caused by the over-discharging of the battery.

In some other embodiments, the processing module 30 is further configured to: control, when the estimated need state of charge is greater than the current remaining state of charge and the sum of the estimated need state of charge and the second preset state of charge is greater than or equal to the first preset state of charge, the vehicle to be charged to a target state of charge that is equal to the sum of the estimated need state of charge and the second preset state of charge; and control, when the estimated need state of charge is greater than the current remaining state of charge and the sum of the estimated need state of charge and the second preset state of charge is less than the first preset state of charge, the vehicle to be charged to a target state of charge that is equal to the first preset state of charge. The second preset state of charge is less than the first preset state of charge.

The second preset state of charge may be set based on the actual requirement. For example, the second preset state of charge is set to 10%. The processing module 30 is configured to: control, when the vehicle needs charging, the vehicle to be charged to a target state of charge that is greater than or equal to the sum of the estimated need state of charge and the second preset state of charge. This makes the target state of charge of the vehicle satisfy the driving requirement of the user, and makes the vehicle store the second preset state of charge as a backup. This avoids a case in which the vehicle cannot be used because of an insufficient state of charge when the user temporarily increases the driving mileage. In addition, the second preset state of charge may be a correction compensation value of the state of charge charged into the vehicle. Because in a charging process, the state of charge charged into the vehicle may deviate from a set value. The vehicle is controlled to be charged to the target state of charge that is greater than or equal to the sum of the estimated need state of charge and the second preset state of charge. This can compensate deviation of the charged state of charge in the charging process, so that the target state of charge is at least greater than the estimated need state of charge, to satisfy the driving requirement of the user.

In some embodiments, that the processing module 30 is configured to determine, based on the estimated need state of charge and the current remaining state of charge, whether the vehicle needs charging further includes: the processing module 30 is configured to: determine, when the estimated need state of charge is less than or equal to the current remaining state of charge, and the current remaining state of charge is less than the third preset state of charge, that the vehicle needs charging; control the vehicle to be charged to a target state of charge that is equal to a third preset state of charge; and determine, when the estimated need state of charge is less than or equal to the current remaining state of charge, and the current remaining state of charge is greater than or equal to the third preset state of charge, that the vehicle does not need charging.

The processing module 30 is configured to compare the current remaining state of charge and the third preset state of charge.

The processing module 30 is configured to: control, when the estimated need state of charge is less than or equal to the current remaining state of charge, and the current remaining state of charge is less than a third preset state of charge, the vehicle to be charged to a target state of charge that is equal to the third preset state of charge. This can make the vehicle have the sufficient state of charge for the self-discharge process of the battery when the vehicle is not used, to avoid shortening the battery life caused by the over-discharging of the battery. In some embodiments, the third preset state of charge may be set based on the actual requirement, for example, 30%.

The processing module 30 determines, when the estimated need state of charge is less than or equal to the current remaining state of charge, and the current remaining state of charge is greater than or equal to the third preset state of charge, that the vehicle does not need charging. The current remaining state of charge of the vehicle satisfies the driving requirement of the user, and makes the vehicle have the sufficient state of charge for the self-discharge process of the battery when the vehicle is not used, to avoid shortening the battery life caused by the over-discharging of the battery. In addition, it is determined, by comparing the estimated need state of charge and the current remaining state of charge, that the current remaining state of charge can satisfy the driving requirement of the user. Therefore, it is determined that the vehicle does not need charging. This can avoid shortening the battery life caused by being in the high charging state when unnecessary charging of the vehicle is performed.

In other embodiments, the processing module 30 is further configured to: determine, when the estimated need state of charge is less than or equal to the current remaining state of charge, that the vehicle does not need charging. When the current remaining state of charge of the vehicle can satisfy the driving requirement of the user, charging may not be performed to the vehicle. In addition, this can avoid shortening the battery life caused by being in the high charging state when unnecessary charging of the vehicle is performed.

In some embodiments, the processing module 30 is further configured to: determine a next driving start moment after the current moment based on the driving time point of each driving when the vehicle needs charging; determine the interval between the current moment and the next driving start moment as the first charging time; and determine a charging current based on the first charging time and the estimated need state of charge.

The read module 10 reads a driving time point of each driving in the preset time and sends the driving time point to the processing module 30. The processing module 30 performs statistics and analysis on driving time point of each driving in the preset time when receiving the driving time point of each driving in the preset time, to determine the next driving start moment after the current moment; determines the interval between the current moment and the next driving start moment as the first charging time; and determines the charging current based on the first charging time and the estimated need state of charge. While controlling the vehicle to be charged to the target state of charge that is greater than or equal to the estimated need state of charge in the first charging time, the processing module 30 controls the vehicle to be charged with as small the charging current as possible to expand the battery life of the vehicle.

In some other embodiments, the processing module 30 is further configured to: determine the next driving start moment after the current moment based on the driving time point of each driving when the vehicle needs charging; determine second charging time based on a preset charging rate and the estimated need state of charge, where the second charging time is less than an interval between the current moment and the next driving start moment; and determine a charging start moment based on the second charging time, where an interval between the charging start moment and the next driving start moment is the second charging time.

When the second charging time is determined based on the preset charging rate and the estimated need state of charge, and the second charging time is less than the interval between the current moment and the next driving start moment, the selected charging start moment may be as close as possible to the next driving start moment. Therefore, when an interval between the charging start moment and the next driving start moment is equal to the second charging time, the vehicle is delayed to be charged. In this case, the battery of the vehicle is in the high charging state for as short a time as possible, to expand the battery life. Therefore, the charging control method provided in embodiments of the present disclosure can intelligently determine the charging start moment, and shorten time when the battery is in the high charging state, to expand the battery life.

In some embodiments, the charging control apparatus 100 may be set in the vehicle. The charging control apparatus 100 further includes a communication module and a control switch (which is not shown in the figure). The communication module is configured to communicate with a power supply device. The power supply device is configured to charge the vehicle. The control switch is connected between the battery of the vehicle and a charging interface of the vehicle. When the power supply device is connected to the charging interface of the vehicle, the control switch is configured to: connect, when the control switch is in an on state, a connection between the battery and the power supply device, and to disconnect, when the control switch is in an off state, the connection between the battery and the power supply device. The power supply device may be a charging pile, and the like.

The processing module 30 sends, when it is determined that the vehicle needs charging, a charging instruction that the vehicle is charged to the target state of charge to the communication module; and controls the control switch to switch from the off state to the on state to connect the battery and the power supply device. The communication module sends the charging instruction to the power supply device. The power supply device charges the vehicle based on the charging instruction, and charges the state of charge of the vehicle to the target state of charge.

The processing module 30 controls, when it is determined that the vehicle does not need charging, the control switch, to remain in a closed state to keep the battery disconnected from the power supply device. Therefore, the power supply device cannot charge the state of charge into the battery.

The power supply device may be a DC charging pile or an AC charging pile. The communication module may communicate with the power supply device via a CAN (Controller Area Network) bus. The control switch may be a DC contactor or an AC contactor.

The read module 10, the detection module 20, and the processing module 30 may be a processor or a controller for example, may be a general-purpose processor, a digital signal processor (Digital Signal Processor, DSP), an application-specific integrated circuit (Application-Specific Integrated Circuit, ASIC), a field programmable gate array (Field Programmable Gate Array, FPGA), or another programmable logic device, a transistor logic device, a hardware component, or any combination thereof. It may implement or execute various exemplary logical blocks, modules and circuits described in connection with the present disclosure. The processor may also be a combination that implements a computing function, such as a combination of one or more microprocessors, a combination of the DSP and the microprocessor. The communication module may be a transceiver, a transceiver circuit, a radio frequency chip, a communication interface, and the like. The storage module may be a memory.

The foregoing method of the present disclosure and functional operations performed by the charging control apparatus 100 may be performed after the charging interface of the vehicle is connected to the power supply device.

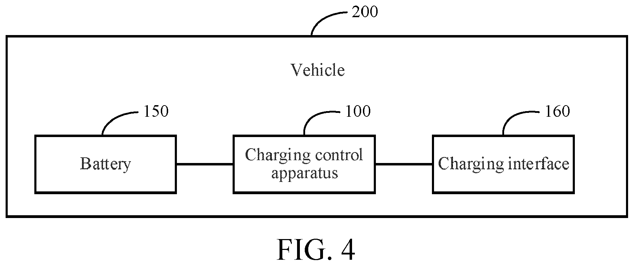

FIG. 4 is a vehicle 200 according to an embodiment of the present disclosure. As shown in FIG. 4, the vehicle 200 includes a battery 150, a charging interface 160, and the charging control apparatus 100 provided according to any one of the foregoing embodiments.

The battery 150 is connected to the charging control apparatus 100. The charging control apparatus 100 is configured to control a charging process of the battery 150. The charging interface 160 is connected to the charging control apparatus 100. The charging interface 160 is connected to a power supply device. Therefore, the power supply device may charge the battery 150 by using the charging interface 160.

The vehicle 200 involved in embodiments of the present disclosure may be a vehicle having a built-in power battery, such as a pure electric vehicle, and a hybrid vehicle. When the vehicle 200 is the hybrid vehicle, a total driving mileage M corresponds to a part of the hybrid vehicle driven by electric power of the battery 150. The vehicle 200 may be the pure electric vehicle, a pure electric truck, a pure electric van, the hybrid vehicle, a hybrid van, a hybrid truck, and the like.

A computer-readable storage medium is provided in embodiments of the present disclosure. The computer-readable storage medium has a computer program stored therein. The computer program is executed by a processor to implement the charging control method provided according to any one of the foregoing embodiments.

A person ordinary skill in the art may understand that all or some of the steps to the embodiments may be by a program instructing relevant hardware. The program may be stored in using a computer-readable storage memory. The storage memory may include a flash disk, a read-only memory, a random access device, magnetic disk, an optical disk, or the like.

It should be noted that, for the foregoing method embodiments, for brief description, all method embodiments are described as a series of action combinations. However, a person of ordinary skill in the art should note that the present disclosure is not limited by the described action sequence. Because in accordance with the present disclosure, steps may be performed in other orders or simultaneously. In addition, a person of ordinary skill in the art should note that embodiments described in the specification are all preferred embodiments, and the involved action and module are not necessarily required for the present disclosure.

In the foregoing embodiments, the descriptions of each embodiment have different focuses, and for a part that is not described in detail in an embodiment, refer to the relevant description of other embodiments.

The foregoing is an implementation of embodiments of the present disclosure. It should be noted that, a person of ordinary skill in the art can further make several improvements and refinements without departing from the principle of embodiments of the present disclosure, and the improvements and refinements shall fall within the protection scope of the present disclosure.

## Claims

1. A charging control method for a vehicle having an electric function, the charging control method comprising following steps:
reading vehicle usage habit data of a user in preset time, the usage habit data comprising a charging time point of each charging and driving mileage of each driving of the vehicle in the preset time (S101);
detecting a current remaining state of charge of the vehicle at a current moment (S102);
determining, based on the usage habit data, an estimated need state of charge of the vehicle (S103); and
determining, based on the estimated need state of charge and the current remaining state of charge, whether the vehicle needs charging (S104).

2. The charging control method for a vehicle according to claim 1, the determining estimated need state of charge of the vehicle based on the usage habit data comprising:
obtaining a driving range N of the vehicle at full charge (S1031);
determining, based on the usage habit data, a next charging moment after the current moment and total driving mileage M in a time period from the current moment to the next charging moment, wherein the total driving mileage M is a sum of all driving mileage in the time period from the current moment to the next charging moment (S1032); and
determining the estimated need state of charge SOC1 based on the total driving mileage M and the driving range N, wherein SOC1=M/N* 100% (S1033).

3. The charging control method for a vehicle according to claim 1 or 2, the determining, based on the estimated need state of charge and the current remaining state of charge, whether the vehicle needs charging comprising:
determining, when the estimated need state of charge is greater than the current remaining state of charge, that the vehicle needs charging.

4. The charging control method for a vehicle according to claim 3, the charging control method further comprising:
controlling the vehicle to be charged to a target state of charge, wherein the target state of charge is greater than or equal to the estimated need state of charge.

5. The charging control method for a vehicle according to claim 4, the controlling the vehicle to be charged to a target state of charge comprising:
controlling, when the estimated need state of charge is greater than a first preset state of charge, the vehicle to be charged to a target state of charge that is equal to the estimated need state of charge; and
controlling, when the estimated need state of charge is less than or equal to the first preset state of charge, the vehicle to be charged to a target state of charge that is equal to the first preset state of charge.

6. The charging control method for a vehicle according to claim 5, the controlling the vehicle to be charged to a target state of charge comprising:
controlling, when a sum of the estimated need state of charge and a second preset state of charge is greater than or equal to the first preset state of charge, the vehicle to be charged to a target state of charge that is equal to the sum of the estimated need state of charge and the second preset state of charge; and
controlling, when the sum of the estimated need state of charge and the second preset state of charge is less than the first preset state of charge, the vehicle to be charged to a target state of charge that is equal to the first preset state of charge.

7. The charging control method for a vehicle according to claim 1 or 2, the determining, based on the estimated need state of charge and the current remaining state of charge, whether the vehicle needs charging comprising:
determining, when the estimated need state of charge is less than or equal to the current remaining state of charge, and the current remaining state of charge is less than a third preset state of charge, that the vehicle needs charging; and controlling the vehicle to be charged to a target state of charge that is equal to the third preset state of charge; and
determining, when the estimated need state of charge is less than or equal to the current remaining state of charge, and the current remaining state of charge is greater than or equal to the third preset state of charge, that the vehicle does not need charging.

8. The charging control method for a vehicle according to claim 4 or 5, the usage habit data further comprising a driving time point of each driving in the preset time, and the method further comprising:
determining, when it is determined that the vehicle needs charging, a next driving start moment after the current moment based on the driving time point of each driving;
determining an interval between the current moment and the next driving start moment as first charging time; and
determining a charging current based on the first charging time and a difference between the target state of charge and the current remaining state of charge.

9. The charging control method for a vehicle according to claim 8, the determining a charging current based on the first charging time and a difference between the target state of charge and the current remaining state of charge comprising:
determining, when the target state of charge is equal to the estimated need state of charge, the charging current based on the first charging time and a difference between the estimated need state of charge and the current remaining state of charge.

10. The charging control method for a vehicle according to claim 6, the usage habit data further comprising a driving time point of each driving in the preset time, and the method further comprising:
determining, when it is determined that the vehicle needs charging, a next driving start moment after the current moment based on the driving time point of each driving;
determining an interval between the current moment and the next driving start moment as first charging time; and
determining a charging current based on the first charging time and a difference between the target state of charge and the current remaining state of charge.

11. The charging control method for a vehicle according to claim 10, the determining a charging current based on the first charging time and a difference between the target state of charge and the current remaining state of charge comprising:
determining, when the target state of charge is equal to the sum of the estimated need state of charge and the second preset state of charge, the charging current based on the first charging time and the difference between the target state of charge and the current remaining state of charge, wherein the difference between the target state of charge and the current remaining state of charge is the sum of the estimated need state of charge and the second preset state of charge minus the current remaining state of charge; and
determining, when the target state of charge is equal to the first preset state of charge, the charging current based on the first charging time and a difference between the first preset state of charge and the current remaining state of charge.

12. The charging control method for a vehicle according to claim 4 or 5, the usage habit data further comprising a driving time point of each driving in the preset time, and the method further comprising:
determining, when it is determined that the vehicle needs charging, a next driving start moment after the current moment based on the driving time point of each driving;
determining second charging time based on a preset charging rate and a difference between the target state of charge and the current remaining state of charge, wherein the second charging time is less than an interval between the current moment and the next driving start moment; and
determining a charging start moment based on the second charging time, wherein an interval between the charging start moment and the next driving start moment is the second charging time.

13. The charging control method for a vehicle according to claim 12, the determining second charging time based on a preset charging rate and a difference between the target state of charge and the current remaining state of charge comprising:
determining the second charging time based on the preset charging rate and the estimated need state of charge when the target state of charge is equal to the estimated need state of charge.

14. The charging control method for a vehicle according to claim 6, the usage habit data further comprising a driving time point of each driving in the preset time, and the method further comprising:
determining, when it is determined that the vehicle needs charging, a next driving start moment after the current moment based on the driving time point of each driving.;
determining second charging time based on a preset charging rate and a difference between the target state of charge and the current remaining state of charge, wherein the second charging time is less than an interval between the current moment and the next driving start moment; and
determining a charging start moment based on the second charging time, wherein an interval between the charging start moment and the next driving start moment is the second charging time.

15. The charging control method for a vehicle according to claim 14, the determining second charging time based on a preset charging rate and a difference between the target state of charge and the current remaining state of charge comprising:
determining, when the target state of charge is equal to a sum of the estimated need state of charge and the second preset state of charge, the second charging time based on the preset charging rate and the sum of the estimated need state of charge and the second preset state of charge; and
determining, the second charging time based on the preset charging rate and the first preset state of charge when the target state of charge is equal to the first preset state of charge.

16. The charging control method for a vehicle according to any one of claims 1 to 5, the determining, based on the estimated need state of charge and the current remaining state of charge, whether the vehicle needs charging comprising:
determining, when the estimated need state of charge is less than or equal to the current remaining state of charge, that the vehicle does not need charging.

17. A charging control apparatus (100) for a vehicle, the charging control apparatus (100) comprising:
a read module (10), configured to read vehicle usage habit data of a user in preset time, the usage habit data comprising a charging time point of each charging and driving mileage of each driving of the vehicle in the preset time;
a detection module (20), configured to detect a current remaining state of charge of the vehicle at a current moment; and
a processing module (30), configured to: determine an estimated need state of charge of the vehicle based on the usage habit data; and determine, based on the estimated need state of charge and the current remaining state of charge, whether the vehicle needs charging.

18. A vehicle (200), comprising a battery (150) and the charging control apparatus (100) according to claim 17.

19. A computer-readable storage medium, the computer-readable storage medium having a computer program stored therein, and the computer program, when executed by a processor, implementing the charging control method according to any one of claims 1 to 16.
